# EUROPÄISCHE PATENTSCHRIFT

(11) **EP 4 015 696 B1**
(45) Veröffentlichungstag und Bekanntmachung des Hinweises auf die Patenterteilung: **03.07.2024**
(21) Anmeldenummer: 21211307.0
(22) Anmeldetag: 30.11.2021
(51) Int. Cl.: D06F 39/02, D06F 34/20

(54) **HAUSHALTSGERÄT MIT EINER BEHÄLTERAUFNAHME**
DOMESTIC APPLIANCE WITH A CONTAINER HOLDER
APPAREIL ÉLECTROMÉNAGER DOTÉ D'UN LOGEMENT DE RÉCIPIENT

(30) Priorität: 18.12.2020 DE 102020216313
(43) Veröffentlichungstag der Anmeldung: 22.06.2022
(73) Patentinhaber: BSH Hausgeräte GmbH, 81739 München (DE)
(72) Erfinder: Eglmeier, Hans, 10587 Berlin (DE)

(56) Entgegenhaltungen:
- EP-A1- 3 617 377
- EP-A2- 0 989 389
- WO-A1-2019/039140
- DE-A1- 19 960 311

## Beschreibung

Die Erfindung betrifft ein Haushaltsgerät mit einer Behälteraufnahme, für wenigstens einen entnehmbaren Behälter, und mit einer Detektionseinrichtung, wobei das Haushaltsgerät aus dem wenigstens einen entnehmbaren Behälter zur Durchführung eines Prozesses im Haushaltsgerät einen Betriebsstoff entnehmen kann, wobei die Detektionseinrichtung dazu eingerichtet ist, zu prüfen, ob wenigstens ein Behälter in der Behälteraufnahme im Haushaltsgerät vorhanden ist, und wobei die Detektionseinrichtung wenigstens einen Magnetfeldsensor umfasst. Die Erfindung betrifft außerdem einen Behälter für ein derartiges Haushaltsgerät.

Haushaltsgeräte mit derartigen Merkmalen sind beispielsweise in Form von Kaffeeautomaten bekannt, bei denen am Wasserbehälter oder an der Auffangschale ein Magnet vorgesehen ist, der einen im Gehäuse des Gerätes eingebetteten Reed-Kontakt betätigt, sobald der Behälter vollständig und richtig eingesetzt ist. Eine solches Gerät ist beispielsweise in der DE 10 2010 023 668 A1 offenbart.

US 2013 115130 zeigt eine Waschmaschine mit einem Wäschebehälter der mit einem Magneten ausgestattet ist, wobei das Vorhandensein des Behälters mittels eines Reed-Kontaktes im Gerät erkannt wird.

Bei der DE 10 2006 043 516 B3 ist es die Flusenfalle vor der Ablasspumpe, deren Anwesenheit auf diese Weise erkannt wird.

Bekannt sind auch Systeme zur Identifikation von Tanks durch speziell dafür an den Tanks angebrachte maschinenlesbare Kodierungen, etwa optische Markierungen in Form von Barcodes oder Markierung von Tanks durch aufwendigere Systeme, wie etwa RFID.

WO 2019/039140 A1 beschreibt eine Waschmaschine, die ein Gehäuse, einen in dem Gehäuse gelagerten Wassertank, einen in dem Wassertank drehbar angeordneten Waschtank, ein über dem Wassertank vorgesehenes und ein Gehäuse aufweisendes Tankgehäuse, einen in dem Gehäuseabschnitt des Gehäuses angeordneten Tank, der ein flüssiges Mittel enthält, und eine automatische Flüssigmittel-Einspritzvorrichtung zum automatischen Zuführen des Flüssigmittels in dem Tank in den Waschtrog umfasst, wobei die automatische Flüssigmittel-Einspritzvorrichtung in dem Tank installiert ist, und eine Pumpeneinheit zum Ansaugen und Abgeben eines Flüssigmittels darin. Das von der Pumpeneinheit abgegebene flüssige Mittel fällt frei und wird dem Wassertank zugeführt.

EP 0 989 389 A2 beschreibt eine Füllstandmesseinrichtung zur Messung eines Fluidfüllstands in einem ein Fluid enthaltenden Behälter, mit einem in dem Behälter angeordneten Schwimmer, dessen spezifisches Gewicht kleiner als das spezifische Gewicht des Fluids ist, einem in dem Behälter angeordneten Magneten, insbesondere Permanentmagneten, der mit dem Schwimmer bewegungsmäßig gekoppelt ist und bei einer Änderung des Füllstandes eine der Füllstandänderung entsprechende Bewegung, insbesondere Rotations- oder Linearbewegung ausführt, und einem außerhalb des Behälters in dem Einflussbereich eines von dem Magneten erzeugten Magnetfeldes (B) angeordneten Magnetfeldsensor zur Ausgabe eines für die Höhe des Füllstands des Behälters repräsentativen elektrischen Signals, wobei der Magnetfeldsensor dazu dient, eine berührungslose Information über das Füllstandniveau zu erhalten und wobei der Magnetfeldsensor ein magnetoresistiver Sensor ist.

Die Aufgabe der vorliegenden Erfindung besteht darin, mit geringem Aufwand eine Möglichkeit bereitzustellen, nicht nur die Anwesenheit eines Behälters festzustellen, sondern auch den Behälter von einem anderen unterscheiden zu können.

Dies wird erreicht durch ein Haushaltsgerät mit einer Behälteraufnahme, für wenigstens einen entnehmbaren Behälter mit einem Magneten, und mit einer Detektionseinrichtung, wobei das Haushaltsgerät aus dem wenigstens einen entnehmbaren Behälter zur Durchführung eines Prozesses im Haushaltsgerät einen Betriebsstoff entnehmen kann, wobei die Detektionseinrichtung dazu eingerichtet ist, zu prüfen, ob wenigstens ein Behälter in der Behälteraufnahme im Haushaltsgerät vorhanden ist, wobei die Detektionseinrichtung wenigstens einen Magnetfeldsensor umfasst, der polungssensitiv ausgebildet ist und somit unterscheiden kann, ob der Nordpol oder der Südpol des Magneten näher zum Magnetfeldsensor gelegen ist, wobei die Behälteraufnahme die Form eines Schubladenschachtes hat, der Magnetfeldsensor in dem Schubladenschacht angeordnet und der Behälter in dem Schubladenschacht eingeschoben ist. Dies gestattet es, nicht nur die Anwesenheit eines Magneten im Bereich des Magnetfelds Sensors zu erfassen, sondern auch die magnetische Orientierung dieses Magneten, d.h. die Ausrichtung der Magnetpole. Die Detektionseinrichtung kann auf diese Weise einen Behälter mit einer bestimmten magnetischen Orientierung von einem anderen Behälter unterscheiden, der eine andere magnetische Orientierung aufweist.

Gemäß einer vorteilhaften Ausführungsform der Erfindung ist die Detektionseinrichtung eingerichtet, zusätzlich die Magnetfeldstärke als Größe für den Füllstand in einem eingesetzten Behälter auszuwerten. So kann z.B. der Magnet in einem Schwimmer untergebracht sein, der sich je nach Füllstand näher oder entfernter zu dem Magnetfeldsensor befindet. Alternativ kann das Magnetfeld durch ein im Behälter befindliches Medium je nach Füllstand mehr oder weniger stark abgeschirmt sein.

Gemäß einer vorteilhaften Ausführungsform der Erfindung ist das Haushaltsgerät mit einer Steuerungseinrichtung zur Durchführung eines Prozesses in dem Haushaltsgerät ausgestattet, wobei die Steuerungseinrichtung eingerichtet ist, eine Meldung auszugeben, wenn kein Behälter mit einem geeigneten Betriebsstoff für den vorgesehenen Prozess in der Behälteraufnahme vorhanden ist. Diese Meldung kann dann vorteilhaft bei der Benutzung des Haushaltsgeräts unterstützen. Beispielsweise, indem der Benutzer dazu aufgefordert wird, den für den gewählten Prozess geeigneten Betriebsstoff in dem Behälter bereitzustellen. Es kann auch verhindert werden, dass das Haushaltsgerät den Prozess ohne geeigneten Betriebsstoff überhaupt durchführt, um ein schlechtes Prozessergebnis oder Schäden am Haushaltsgerät oder dem Prozess gut zu vermeiden. Eine Waschmaschine kann beispielsweise eine Warnung ausgeben, wenn versucht wird, Wolle mit einem Standard Waschmittel oder umgekehrt zu waschen. In einer vorteilhaften Weiterbildung kann das Haushaltsgerät beim Einsetzen eines Behälters ein zu dem eingesetzten Behälter, d. h. zu dem darin befindlichen Medium passenden Prozess, z.B. ein Behandlungsprogramm, evtl. sogar automatisch, durchführen oder zur Auswahl vorschlagen.

Gemäß einer vorteilhaften Ausführungsform der Erfindung ist das Haushaltsgerät ein wasserführendes Haushaltsgerät, insbesondere eine Waschmaschine, ein Wäschetrockner oder ein Waschtrockner. Bei Waschgeräten können verschiedene einsetzbare Behälter mit unterschiedlichen Pflegemitteln befüllt sein, wobei je nach gewähltem Programm das passende aus einer Vielzahl von Pflegemitteln, beispielsweise Vollwaschmittel, Colorwaschmittel, Feinwaschmittel oder Weichspüler bereitgestellt werden kann, ohne dass für alle Pflegemittel gleichzeitig Platz zur Bevorratung im Gerät vorhanden sein muss. Auch können selten gebrauchte Betriebsstoffe nur im Bedarfsfall bereitgestellt werden.

Bei Kaffeemaschinen lassen sich beispielsweise unterschiedliche Kaffeesorten in austauschbaren Behältern bereitstellen.

Gemäß eines weiteren Aspekts der Erfindung wird die Aufgabe auch gelöst durch einen Behälter für einen Schubladenschacht eines solchen Haushaltsgerätes, wobei an dem Behälter wenigstens ein Magnet so vorgesehen ist, dass dessen Polung von dem Magnetfeldsensor erfasst werden kann, wenn der Behälter in der Behälteraufnahme am Gerät eingesetzt ist. Auf diese Weise kann der Behälter in dem Haushaltsgerät mittels der Detektionseinrichtungen von einem anderen Behälter unterschieden werden, bei dem der Magnet bezüglich seiner Polung anders angeordnet ist.

In einer vorteilhaften Ausführungsform ist die Polung des Magneten optisch gekennzeichnet. Dies gestattet dem Benutzer, Behälter mit Magneten unterschiedlicher Polungsanordnung zu unterscheiden. Vorteilhafterweise kann die magnetische Ausrichtung der Polung des Magneten vom Benutzer geändert werden, sodass der Benutzer selbst festlegen kann, welche Kennzeichnung der Behälter aufweist. Dies ist beispielsweise dann von Vorteil, wenn der Benutzer später zusätzliche Behälter als Zubehör erwirbt und diese dann für andere Betriebsstoffe verwenden will.

Gemäß einer vorteilhaften Weiterbildung ist der Behälter ein Flüssigkeitsbehälter. Gemäß einer weiteren vorteilhaften Weiterbildung weist der Behälter einen Schwimmer auf, der mit dem Magneten gekoppelt ist und der Magnet ist über den gesamten Füllstand im Messbereich des Magnetfeldsensor bewegbar. Somit kann die Behälteridentifikation in besonders einfacher Weise mit einer Füllstandsmessung kombiniert werden. Der Magnet muss im Messbereich des Magnetfeldsensors bleiben, damit ein Behälter mit beliebigem Füllstand beim Einsetzen sicher erkannt wird.

Gemäß noch einer weiteren vorteilhaften Weiterbildung weist der Behälter mehrere Kammern auf. Damit können in einem Behälter gleichzeitig mehrere Betriebsstoffe bereitgestellt werden, die beispielsweise gleichzeitig oder während eines Betriebsprozesses des Geräts benötigt werden.

Ausgestattet mit einem Magneten im Behälter und einem polungssensitiven Magnetfeldsensor im Haushaltsgerät kann so im einfachsten Fall eine Information von 1 Bit zur Behälter-Identifikation übertragen werden. Auf diese Weise lässt sich in einem System mit einem Einzeltank, d. h. ein Tank mit einem Medium, mithilfe eines Sensors im Haushaltsgerät, zwischen zwei verschiedenen Tanks unterscheiden, z.B. einem Tank mit einem Standardwaschmittel und einem Tank mit einem Spezialwaschmittel, etwa für Wolle oder ein Outdoor-Pflegemittel etc. Besonders vorteilhaft kann die Erkennung verwirklicht werden, wenn das Haushaltsgerät ein magnetisches Füllstandmesssystem, beispielsweise mit einem Schwimmer mit Magneten, aufweist. Bei weitverbreiteten Tanksystemen mit zwei Kammern sind dann im Gerät zwei Magnetfeldsensoren vorzusehen. Damit lassen sich bereits 2 Bit Information übertragen, wodurch vier Doppeltanks unterschieden werden können.

In einer vorteilhaften Ausführungsform sind die Magnete in den Behältern fest eingebaut, sodass ihre Polung nicht geändert werden kann. Der Benutzer erhält spezielle Tanks, die außer durch die magnetische Polung auch durch Ihr Design eindeutig für ein bestimmtes Medium bestimmt sind, bzw. mit einem bestimmten Medium vorbefüllt sind. Die Tanks können insbesondere Einwegtanks sein, sodass es nicht durch eine fehlerhafte Nachbefüllung zu einer Inkonsistenz zwischen Kennzeichnung und Inhalt kommt.

Weitere Vorteile und Merkmale der Erfindung ergeben sich aus den Unteransprüchen und der nachfolgenden Beschreibung unter Bezugnahme auf die beigefügten Zeichnungen. In den Zeichnungen zeigt:
- Fig. 1.: Ein Haushaltsgerät nach einer ersten Ausführungsform der Erfindung,
- Fig. 2.: einen ersten Behälter für ein Haushaltsgerät nach Figur 1,
- Fig. 3.: einen zweiten Behälter für ein Haushaltsgerät nach Figur 1,
- Fig. 4.: eine Behälteraufnahme eines Haushaltsgerätes nach einer zweiten Ausführungsform der Erfindung,
- Fig. 5.: die Behälteraufnahme aus Figur 4 mit unterschiedlichen, eingesetzten Behältern,
- Fig. 6.: eine Variante der Ausführungsform aus Figuren 4 und 5, und
- Fig. 7.: einen Ausschnitt einer Behälteraufnahme eines Haushaltsgerätes mit eingesetztem Behälter nach einer dritten Ausführungsform der Erfindung.

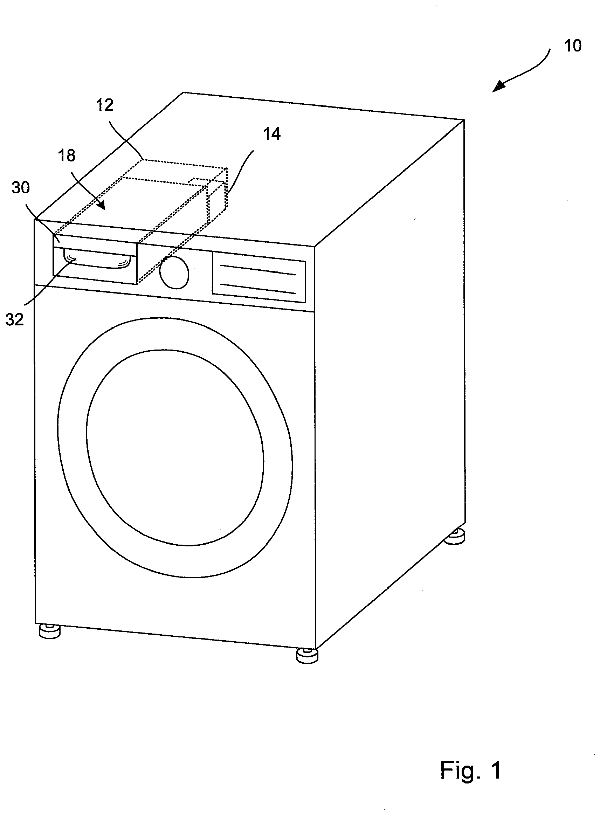

Ein Haushaltsgerät 10 nach einer ersten Ausführungsform in Gestalt einer Waschmaschine, welches in Figur 1 dargestellt ist, weist eine Behälteraufnahme in Form eines Schubladenschachtes 12 und eine Detektionseinrichtung 14 auf. Die Detektionseinrichtung 14 umfasst einen Magnetfeldsensor 16, der in dem Schubladenschacht 12 angebracht ist. In dem Schubladenschacht 12 ist ein Behälter 18 eingeschoben.

Der Behälter ist in der gezeigten Ausführungsform als Waschmittelschublade 18 ausgebildet. Die Waschmittelschublade 18 hat eine Quaderform, mit einer vorderen Stirnwand 30, an der ein Griff 32 ausgebildet ist, und einer gegenüberliegenden Rückwand 34. Beim Einschieben in die Behälteraufnahme 12 der Waschmaschine 10 wird die Waschmittelschublade mit der Rückwand 34 voran in die Behälteraufnahme 12 eingeschoben, bis die vordere Stirnwand 30 mit der Vorderwand der Waschmaschine abschließt und der Griff 32 zugänglich ist. Vollständig eingeschoben grenzt die Rückwand 34 an die Detektionseinrichtung 14.

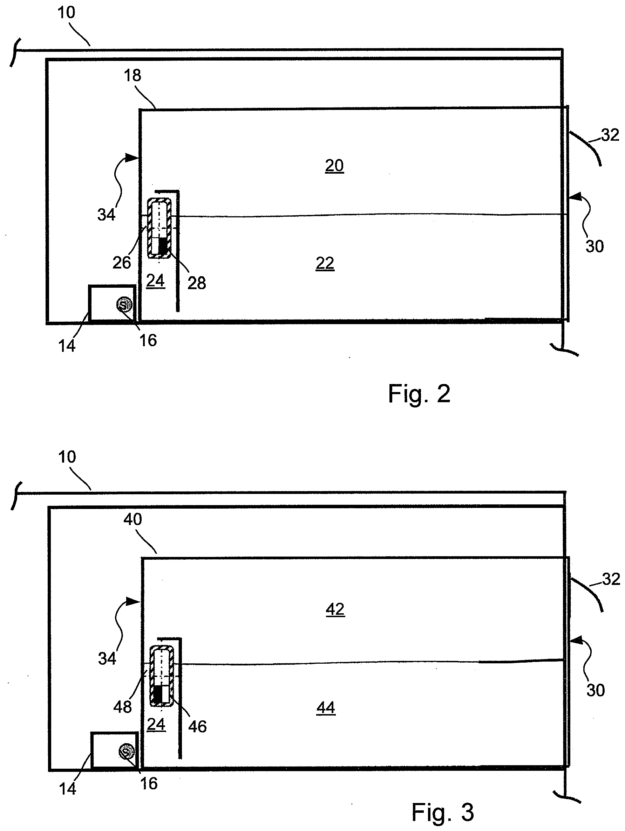

In Figur 2 ist der Schubladenschacht 12 mit dem darin sitzenden Behälter 18 schematisch in einem Querschnitt gezeigt. Die Waschmittelschublade 18 weist einen Vorratsraum 20 zur Aufnahme eines Mediums, in diesem Fall ein Wäschepflegemittel 22 auf. Die Waschmittelschublade 18 ist mit der Waschmaschine 10 auf nicht dargestellte Weise so verbunden, dass diese das Wäschepflegemittel 22 aus der Schublade 18 zur Durchführung eines Waschvorgangs dosieren kann. Von dem Vorratsraum 20 abgeteilt ist eine Messkammer 24 welche mit dem übrigen Vorratsraum 20 in fluidischer Verbindung steht.

In der Messkammer 24 ist ein Schwimmer 26 untergebracht, welcher einen Magneten 28 beherbergt. Der Schwimmer 26 ist in der Messkammer 24 beweglich, sodass seine Position, insbesondere seine vertikale Position, von dem Füllstand des Wäschepflegemittels 22 im Vorratsraum 20 bestimmt ist.

Der Magnetfeldsensor 16 ist in der Detektionseinrichtung 14 in dem Schubladenschacht 12 angebracht. Die Behälteraufnahme beherbergt die Waschmittelschublade 18, solange diese im Haushaltsgerät 10 untergebracht ist. Vorteilhafterweise ist der Magnetfeldsensor 16 so angeordnet, dass der Schwimmer 26 sich möglichst nahe am Magnetfeldsensor 16 befindet, wenn die Waschmittelschublade 18 Im Schubladenschacht 12 eingeschoben ist.

Die Messkammer 24 ist im Inneren der Waschmittelschublade 18 angeordnet und zwar, angrenzend an die Rückwand, welche die Rückseite 34 bildet. Im Schubladenschacht 12 ist der Magnetfeldsensor 16 wiederum so angeordnet, dass die Rückseite 34 der Waschmittelschublade 18 an den Sensor 16 anstößt oder wenigstens möglichst dicht an diesen angrenzt, wenn sich die Waschmittelschublade 18 in dem Schubladenschacht 12 befindet.

In einer Ebene senkrecht zu der Bewegungslinie entlang welcher die Waschmittelschublade 18 in den Schubladenschachte 12 hinein- oder aus dieser herausgeschoben wird, ist der Magnetfeldsensor ebenfalls so angeordnet, dass der Schwimmer 26 mit dem Magneten 28 sich möglichst nahe am Magnetfeldsensor 16 befindet, wenn die Waschmittelschublade 18 eingesetzt ist.

In der gezeigten Ausführungsform kann die Position des Schwimmers 26 abhängig vom Füllstand des Waschmittels 22 in vertikaler Richtung variieren. Der Magnetfeldsensor 16 kann daher anhand der detektierten Magnetfeldstärke die vertikale Position des Magneten 28 bestimmen und so eine Größe für den Füllstand des Waschmittels 22 in der Waschmittelschublade 18 ermitteln.

Der Magnetfeldsensor 16 ist polungssensitiv ausgebildet, d. h., dass er die Polung des Magneten 28 erkennt. Dies bedeutet, dass der Magnetfeldsensor 16 unterscheiden kann, ob der Nordpol oder der Südpol des Magneten 28 näher zum Magnetfeldsensor 16 gelegen ist.

Bei der in der Figur 2 gezeigten Waschmittelschublade 18 ist der Magnet 28 so angeordnet, dass der Nordpol näher zum Magnetfeldsensor 16 angeordnet ist als der Südpol, wenn sich die Waschmittelschublade 18 in dem Schubladenschacht 12 im Haushaltsgerät 10 befindet.

Figur 3 zeigt in einem schematischen Querschnitt den Schubladenschacht 12, in dem ein anderer Behälter in Form einer Weichspülerschublade 40 eingeschoben ist. Die Weichspülerschublade 40 ist geometrisch identisch zur Waschmittelschublade 18 aufgebaut, mit einem Vorratsraum 42 zur Aufnahme eines Mediums, in diesem Fall eines Weichspülmittels 44, und einem Magneten 46, der in einem Schwimmer 48 in einer Messkammer 50 untergebracht ist. Im Unterschied zu der Waschmittelschublade 18 ist in der Weichspülerschublade 40 der Magnet 46 so angeordnet, dass sich der Südpol näher zum Magnetfeldsensor 16 befindet, als der Nordpol, wenn die Weichspülerschublade 40 im Schubladenschacht 12 im Haushaltsgerät 10 eingeschoben ist.

Der Magnetfeldsensor 16 kann daher unterscheiden, ob sich im Schubladenschacht 12 kein Behälter, die Waschmittelschublade 18 oder die Weichspülerschublade 40 befindet.

Der Magnetfeldsensor 16 ist mit einer nicht dargestellten Steuereinrichtung des Haushaltsgeräts 10 verbunden, in welcher die Programmsteuerung des Haushaltsgeräts realisiert ist. Auf diese Weise kann die Programmsteuerung detektieren, ob in dem Schubladenschacht 12 ein Behälter vorhanden ist, der ein zum durchzuführenden Programm passendes Pflegemittel enthält. Ist dies nicht der Fall, kann die Programmsteuerung an den Benutzer eine Meldung ausgeben und diesen auffordern, den richtigen Behälter einzuführen.

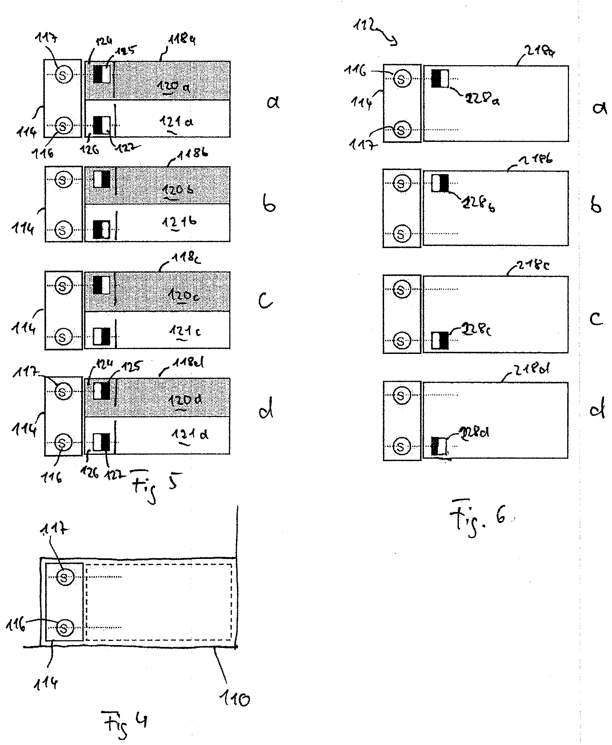

Eine zweite Ausführungsform eines erfindungsgemäßen Haushaltsgeräts 110 ist schematisch in den Figuren 4 und 5 dargestellt. Für bereits im Zusammenhang mit der ersten Ausführungsform beschriebene Merkmale werden um 100 erhöhte Bezugszeichen verwendet.

Figur 4 zeigt einen horizontalen Querschnitt durch den Schubladenschacht 112 des Haushaltsgeräts 110 ohne eingesetzten Behälter. In dem Schubladenschacht 112 ist eine Detektionseinrichtung 114 vorgesehen, bei der ein erster Magnetfeldsensor 116 und ein zweiter Magnetfeldsensor 117 nebeneinander angeordnet sind. Dadurch ist die Detektionseinrichtung 114 in der Lage, zwei unterschiedliche Füllstände in einem eingesetzten Behälter zu erkennen. Aufgrund der Erfindung ist die Detektionseinrichtung 114 aber zusätzlich auch noch in der Lage, vier verschiedene Behälter zu unterscheiden.

Dies ist in den Figuren 5a bis 5d dargestellt. Jede der Figuren 5a bis 5d zeigt das Haushaltsgerät 110 aus Figur 4 mit jeweils einem anderen eingesetzten Behälter 118a bis 118d. Jeder der Behälter 118a bis 118d ist dabei im Prinzip ähnlich aufgebaut wie einer der zuvor beschriebenen Behälter 18 oder 40. Im Unterschied dazu weisen aber die Behälter 118a bis 118d jeweils zwei getrennte Vorratsräume 120 und 121 mit jeweils einer eigenen Messkammer 124 bzw. 125, in der jeweils ein Schwimmer 126 bzw. 127 untergebracht ist, auf.

Jeder der Schwimmer 126 bzw. 127 ist mit jeweils einem Magneten 128,129 versehen. Zur Unterscheidung der Behälter 118a bis 118d ist die Polung der Magnete 128,129 bei jedem der Behälter unterschiedlich. Bei zwei Magneten je Behälter und zwei möglichen Polungen je Magnet ergeben sich damit vier mögliche unterschiedliche Konfigurationen, die von der Detektionseinrichtung 114 im Haushaltsgerät 110 unterschieden werden können. Dadurch ist das Haushaltsgerät 110 in der Lage, zu erkennen, ob ein Behälter eingesetzt ist, und falls ja welcher der vier Behälter eingesetzt ist.

Die Figuren 6a bis 6d, bei denen bereits bekannte Merkmale mit um 200 erhöhten Bezugszeichen versehen sind, zeigen in einer alternativen Ausführungsform schematisch den Schubladenschacht 112 des Haushaltsgerätes 110 in dem eine andere Art Behälter 218a bis 218d eingesetzt sind. Diese Behälter 218a bis 218d haben jeweils nur einen Vorratsraum 220. In dem Vorratsraum 220 ist daher auch nur ein Schwimmer 226 mit einem Magneten 128 vorgesehen. Der Magnet 228 ist aber bei jedem der Behälter 218a bis 218d unterschiedlich gepolt und/oder an einer anderen Position angeordnet, sodass er entweder von dem ersten Magnetfeldsensor 116 oder von dem zweiten Magnetfeldsensor 117 erfasst werden kann.

In einer Variante können die Behälter aus den Figuren 6a bis 6d auch als zusätzliche Behälter für die Ausführungsform nach Figur 5 verwendet werden. Z. B. als Behälter für größere Mengen. Diese Behälter können dadurch von den anderen Behältern mit zwei Kammern dadurch unterschieden werden, dass sie nur einen Magneten aufweisen.

Alternativ kann in der Ausführungsform der Figuren 6a bis 6d vorgesehen sein, dass die Behälter 218 ohne Füllstanderkennung ausgebildet sind. Die Magnete 128 sind dann fest im Behälter 218 angebracht. Bei dieser Konfiguration ergibt sich sogar noch eine höhere Anzahl an unterscheidbaren Konfigurationen für die Behältererkennung, nämlich 3²-1=8, da für jeden der Magnetfeldsensoren drei Zustände (1. Nordpol zum Sensor weisend, 2. Südpol zum Sensor weisend, 3. kein Magnet vorhanden) möglich sind - lediglich ein Behälter ganz ohne Magnete wäre nicht von dem Zustand unterscheidbar, bei dem gar kein Behälter eingesetzt ist. Allgemein steigt die Anzahl der unterscheidbaren Behälter t exponentiell mit der Anzahl der Magneten m, nämlich t=3^{m}. Zur Erweiterung der Codierungsmöglichkeiten eingesetzte zusätzliche Magneten müssen dabei nicht zwingend in einem Schwimmer untergebracht sein, sondern können auch fest am Behälter angebracht sein.

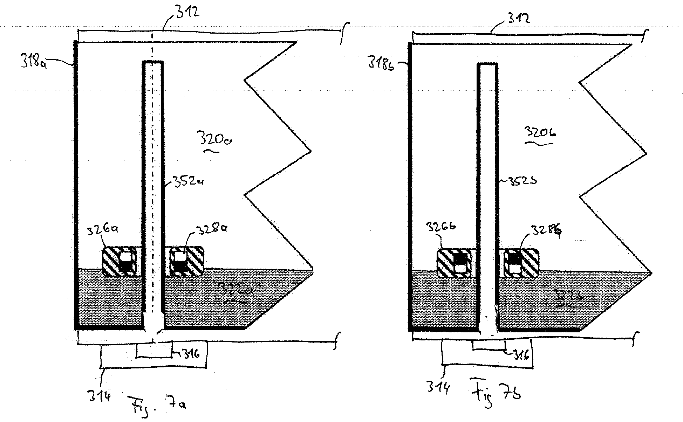

Eine weitere alternative Ausführungsform zeigen die Figur 7a und 7b. Wiederum sind bereits bekannte Merkmale mit um 300 erhöhte Bezugszeichen versehen. In Figur 7a ist in einem schematischen, vertikalen Querschnitt ein Ausschnitt einer Behälteraufnahme 312 eines Haushaltsgeräts 310 mit einem eingesetzten Behälter 318a dargestellt. In einem Vorratsraum 320 des Behälters 318a ist ein flüssiges Medium 322 eingefüllt. Vom Boden des Vorratsraum 320 ragt senkrecht ein Dorn 352 nach oben. Auf diesem Dorn 352 ist ein ringförmiger Schwimmer 326 geführt, in dem ein Ringmagnet 328 eingebettet ist, wobei der Ringmagnet 328 axial magnetisiert ist, d. h. Nord- oder Südpol weisen nach unten oder nach oben. Am Boden der Behälteraufnahme 312 ist ein Magnetfeldsensor 316 vorgesehen. Der Magnetfeldsensor 316 ist so angeordnet, dass bei eingesetztem Behälter 318a der Fuß des Dorns 352 über dem Magnetfeldsensor 316 zu liegen kommt. Figur 7b zeigt dieselbe Behälteraufnahme 312 mit einem anderen eingesetzten Behälter 318b, bei dem der Schwimmer 326 anders herum auf den Dorn 352 aufgesteckt ist, sodass sich der Magnet darin dem Magnetfeldsensor in der entgegengesetzten Polung zeigt.

In dieser Ausführungsform kann von der Detektionseinrichtungen 314 mittels des Magnetfeldsensors 316 aufgrund der Polung des Ringmagneten 328 unterschieden werden, welcher entweder mit seinem Nordpol oder mit seinem Südpol zum Magnetfeldsensor 316 weisen kann.

In einer Variante dieser Ausführungsform kann der Benutzer den Schwimmer 326 mit dem Ringmagneten 328 in unterschiedlicher Orientierung des Magnetfeldes auf den Dorn 352 aufsetzen, je nachdem welches Waschmittel er in den Behälter 318 eingesetzt hat. Vorteilhafterweise ist dazu der Schwimmer 326 auffällig gekennzeichnet, beispielsweise durch eine unterschiedliche Farbgebung an Ober und Unterseite. Dies kann in einfacher Weise dadurch realisiert sein, dass der Schwimmer 326 ein Gehäuse aus zwei Hälften verschiedenfarbigen Kunststoffs aufweist. Das kann besonders einfach realisiert sein, indem beispielsweise der Magnet 328 in zwei ineinander gelipste Kunststoffteile aus unterschiedlicher Farbe eingesetzt oder in ein Gehäuse aus zwei verschiedenfarbigen Kunststoffen eingespritzt ist.

Eine derartige Anpassung der Orientierung des Magneten ist auch bei anderen Ausführungsformen möglich, beispielsweise, in dem in Figur 2 und 3 der Schwimmer andersherum in den Schacht eingesetzt wird. Dies kann vorteilhaft vom Benutzer durchgeführt werden. Alternativ, kann die Orientierung auch bei der Herstellung des Behälters festgelegt werden, damit durch die Interaktion des Benutzers keine Inkonsistenz zwischen Inhalt und Identifikation durch den Magneten auftritt.

Die gezeigten Ausführungsformen stellen in der Anordnung von Behälter, Schwimmer, Sensor und Aufnahme lediglich eine beispielhafte Ausbildung der Erfindung dar. Alternativ kann die Messkammer z.B. an einer Seitenwand des Waschmittelbehälters angeordnet sein, sei es im vorderen Bereich, näher zur vorderen Stirnseite oder im hinteren Bereich näher der Rückseite. Auch das Funktionsprinzip des Schwimmers ist nicht auf einen in einer Kammer auf- und abschwimmenden Schwimmer beschränkt. Alternativ kann der Schwimmer z.B. von einem Schwenkarm geführt sein, oder der Magnet ist nicht im Schwimmer selbst untergebracht, sondern über ein Hebelwerk mit einem Schimmer verbunden.

### Bezugszeichenliste

- 10: Haushaltsgerät
- 12: Behälteraufnahme
- 14: Detektionseinrichtung
- 16,: Magnetfeldsensor
- 18: Waschmittelschublade
- 20: Vorratsraum
- 22: Wäschepflegemittel
- 24: Messkammer
- 26: Schwimmer
- 28: Magnet
- 30: Stirnwand
- 32: Griff
- 34: Rückseite
- 40: Weichspülerschublade
- 42: Vorratsraum
- 44: Weichspülmittel
- 46: Magnet
- 48: Schwimmer
- 50: Messkammer
- 110: Haushaltsgerät
- 112: Schubladenschacht
- 114: Detektionseinrichtung
- 116: Magnetfeldsensor
- 117: Magnetfeldsensor
- 118: Behälter
- 118a -d: Behälter
- 128: Magnet
- 218: Behälter
- 218a -218d: Behälter
- 220: Vorratsraum
- 226: Schwimmer
- 228: Magnet
- 120, 121: Vorratsräume
- 125, 124: Messkammer
- 126, 127: Schwimmer
- 310: Haushaltsgeräts
- 312: Behälteraufnahme
- 314: Detektionseinrichtungen
- 316: Magnetfeldsensor
- 318: Behälter
- 318a -d: Behälter
- 320: Vorratsraum
- 322: Medium
- 326: Schwimmer
- 328: Magnet
- 352: Dorn

## Patentansprüche

1. Haushaltsgerät (10; 110) mit einer Behälteraufnahme (12; 112; 212; 312) mit einem Magneten (28), für wenigstens einen entnehmbaren Behälter (18, 40; 118; 218; 318), und mit einer Detektionseinrichtung (14; 114; 214; 314),
wobei das Haushaltsgerät aus dem wenigstens einen entnehmbaren Behälter zur Durchführung eines Prozesses im Haushaltsgerät einen Betriebsstoff (22, 44; 322) entnehmen kann,
wobei die Detektionseinrichtung dazu eingerichtet ist, zu prüfen, ob wenigstens ein Behälter in der Behälteraufnahme im Haushaltsgerät vorhanden ist,
wobei die Detektionseinrichtung wenigstens einen Magnetfeldsensor (16; 116, 117; 216; 316) umfasst, der polungssensitiv ausgebildet ist und somit unterscheiden kann, ob der Nordpol oder der Südpol des Magneten (28) näher zum Magnetfeldsensor (16) gelegen ist,
**dadurch gekennzeichnet, daß**
die Behälteraufnahme (12; 112; 212; 312) die Form eines Schubladenschachtes (12) hat, der Magnetfeldsensor (16) in dem Schubladenschacht (12) angeordnet und in dem Schubladenschacht (12) der Behälter (18) eingeschoben ist.

2. Haushaltsgerät (10; 110) nach Anspruch 1, bei dem die Detektionseinrichtung (14; 114; 214; 314) eingerichtet ist, zusätzlich die Magnetfeldstärke als Größe für den Füllstand in einem eingesetzten Behälter (18, 40; 118; 218; 318) auszuwerten.

3. Haushaltsgerät (10; 110) nach Anspruch 1 oder 2, mit einer Steuerungseinrichtung zur Durchführung eines Prozesses in dem Haushaltsgerät, wobei die Steuerungseinrichtung eingerichtet ist, eine Meldung auszugeben, wenn kein Behälter mit einem geeigneten Betriebsstoff für den Prozess in der Behälteraufnahme vorhanden ist.

4. Haushaltsgerät (10; 110) nach einem der vorhergehenden Ansprüche, wobei das Haushaltsgerät ein wasserführendes Haushaltsgerät ist.

5. Haushaltsgerät (10; 110) nach Anspruch 4, wobei das Haushaltsgerät eine Waschmaschine, ein Wäschetrockner oder ein Waschtrockner ist.

6. Behälter (18, 40; 118; 218; 318) für einen Schubladenschacht (12) eines Haushaltsgerätes (10; 110) nach einem der vorhergehenden Ansprüche, wobei an dem Behälter wenigstens ein Magnet (28, 46; 125, 127; 228; 328) so vorgesehen ist, dass dessen Polung von dem Magnetfeldsensor (16; 116, 117; 216; 316) erfasst werden kann, wenn der Behälter in der Behälteraufnahme (12; 112; 212; 312) am Gerät eingesetzt ist.

7. Behälter (18, 40; 118; 218; 318) nach Anspruch 6, wobei die Polung des Magneten (28, 46; 125, 127; 228; 328) optisch gekennzeichnet ist.

8. Behälter (18, 40; 118; 218; 318) nach Anspruch 6 oder 7, wobei der Behälter ein Flüssigkeitsbehälter ist und einen Schwimmer aufweist, der mit dem Magneten gekoppelt ist und der Magnet über den gesamten Füllstand im Messbereich des Magnetfeldsensor bewegbar ist.

9. Behälter (118) nach einem der Ansprüche 6-8, wobei der Behälter mehrere Kammern (120, 121) aufweist.

## Claims

1. Household appliance (10; 110) with a container receptacle (12; 112; 212; 312) with a magnet (28), for at least one removable container (18, 40; 118; 218; 318), and with a detection facility (14; 114; 214; 314),
wherein the household appliance can remove an operating substance (22, 44; 322) from the at least one removable container for performing a process in the household appliance,
wherein the detection facility is configured to check whether at least one container is present in the container receptacle in the household appliance,
wherein the detection facility comprises at least one magnetic field sensor (16; 116, 117; 216; 316), which is embodied as polarity-sensitive and thus can distinguish whether the north pole or the south pole of the magnet (28) is located closer to the magnetic field sensor (16),
**characterised in that**
the container receptacle (12; 112; 212; 312) has the shape of a drawer duct (12), the magnetic field sensor (16) is arranged in the drawer duct (12) and the container (18) is inserted in the drawer duct (12).

2. Household appliance (10; 110) according to claim 1, in which the detection facility (14; 114; 214; 314) is configured to additionally evaluate the magnetic field strength as a variable for the fill level in an inserted container (18, 40; 118; 218; 318).

3. Household appliance (10; 110) according to claim 1 or 2, with a control facility for performing a process in the household appliance, wherein the control facility is configured to output a message when no container with a suitable operating substance for the process is present in the container receptacle.

4. Household appliance (10; 110) according to one of the preceding claims, wherein the household appliance is a water-conducting household appliance.

5. Household appliance (10; 110) according to claim 4, wherein the household appliance is a washing machine, a tumble dryer or a washer-dryer.

6. Container (18, 40; 118; 218; 318) for a drawer duct (12) of a household appliance (10; 110) according to one of the preceding claims, wherein at least one magnet (28, 46; 125, 127; 228; 328) is provided on the container such that the polarity thereof can be captured by the magnetic field sensor (16; 116, 117; 216; 316) when the container is inserted in the operating receptacle (12; 112; 212; 312) on the appliance.

7. Container (18, 40; 118; 218; 318) according to claim 6, wherein the polarity of the magnet (28, 46; 125, 127; 228; 328) is marked visually.

8. Container (18, 40; 118; 218; 318) according to claim 6 or 7, wherein the container is a liquid container, and has a floater that is coupled to the magnet, and the magnet can be moved over the entire fill level in the measurement region of the magnetic field sensor.

9. Container (118) according to one of claims 6-8, wherein the container has multiple chambers (120, 121).

## Revendications

1. Appareil électroménager (10, 110) comprenant un logement de récipient (12, 112, 212, 312) comportant un aimant (28), pour au moins un récipient amovible (18, 40, 118, 218, 318), et un dispositif de détection (14, 114, 214, 314)
dans lequel l'appareil électroménager peut extraire un produit fonctionnel (22, 44, 322) de l'au moins un récipient amovible pour exécuter un processus dans l'appareil électroménager,
dans lequel le dispositif de détection est configuré pour contrôler si au moins un récipient est présent dans le logement de récipient dans l'appareil électroménager, dans lequel le dispositif de détection comprend au moins un détecteur de champ magnétique (16, 116, 117, 216, 316), qui est configuré de sorte à être sensible à une polarité et peut ainsi distinguer si le pôle Nord ou le pôle Sud de l'aimant (28) est situé le plus proche du capteur de champ magnétique (16).
**caractérisé en ce que**
le logement de récipient (12, 112, 212, 312) a la forme d'un puits à tiroir (12), le capteur de champ magnétique (16) est disposé dans le puits à tiroir (12) et le récipient (18) est inséré dans le puits à tiroir (12).

2. Appareil électroménager (10, 110) selon la revendication 1, dans lequel le dispositif de détection (14, 114, 214, 314) est configuré pour évaluer en outre l'intensité du champ magnétique à titre de grandeur pour le niveau de remplissage dans un récipient inséré (18, 40, 118, 218, 318).

3. Appareil électroménager (10, 110) selon la revendication 1 ou 2, comprenant un dispositif de commande pour exécuter un processus dans l'appareil électroménager, dans lequel le dispositif de commande est configuré pour émettre un message lorsqu'aucun récipient comportant un produit fonctionnel approprié pour le processus n'est présent dans le logement de récipient.

4. Appareil électroménager (10, 110) selon l'une des revendications précédentes, dans lequel l'appareil électroménager est un appareil électroménager à circulation d'eau.

5. Appareil électroménager (10, 110) selon la revendication 4, dans lequel l'appareil électroménager est un lave-linge, un sèche-linge ou un lave-linge séchant.

6. Récipient (18, 40, 118, 218, 318) pour un puits à tiroir (12) d'un appareil électroménager (10, 110) selon l'une des revendications précédentes, dans lequel au moins un aimant (28, 46, 125, 127, 228, 328) est disposé sur le récipient, de manière à ce que sa polarité puisse être détectée par le capteur de champ magnétique (16, 116, 117, 216, 316) lorsque le récipient est inséré dans le logement de récipient (12, 112, 212, 312) dans l'appareil.

7. Récipient (18, 40, 118, 218, 318) selon la revendication 6, dans lequel la polarité de l'aimant (28, 46, 125, 127, 228, 328) est **caractérisée** optiquement.

8. Récipient (18, 40, 118, 218, 318) selon la revendication 6 ou 7, dans lequel le récipient comprend un réservoir de liquide et un flotteur, qui est couplé à l'aimant et l'aimant peut être déplacé par le niveau de remplissage d'ensemble dans la plage de mesure du capteur de champ magnétique.

9. Récipient (118) selon l'une des revendications 6 à 8, dans lequel le récipient comprend plusieurs compartiments (120, 121).
